# EUROPÄISCHE PATENTSCHRIFT

(11) **EP 1 417 109 B1**
(45) Veröffentlichungstag und Bekanntmachung des Hinweises auf die Patenterteilung: **30.04.2008**
(21) Anmeldenummer: 02754470.9
(22) Anmeldetag: 26.07.2002
(51) Int. Cl.: B60K 11/04

(54) **KÜHLSYSTEM FÜR FAHRZEUGE**
COOLING SYSTEM FOR MOTOR VEHICLES
SYSTÈME DE RÉFROIDISSEMENT POUR VÉHICULES

(30) Priorität: 01.08.2001 DE 10137717
(43) Veröffentlichungstag der Anmeldung: 12.05.2004
(73) Patentinhaber: Behr GmbH & Co. KG, 70469 Stuttgart (DE)
(72) Erfinder: BROTZ, Friedrich, 72766 Reutlingen (DE); PANTOW, Eberhard, 71696 Möglingen (DE); UHL, Bernhard, 70195 Stuttgart (DE)
(74) Vertreter: Grosse, Rainer
(86) Internationale Anmeldenummer: PCT/DE2002/002827
(87) Internationale Veröffentlichungsnummer: WO 2003/013894

(56) Entgegenhaltungen:
- EP-A- 0 919 705
- WO-A-97/45628
- DE-A- 3 145 506
- DE-A- 3 942 010
- DE-A- 4 304 336
- DE-C- 4 227 565
- GB-A- 2 311 843
- US-A- 1 817 398
- US-A- 4 438 732
- US-A- 4 489 680
- US-A- 4 756 279
- US-A- 6 106 228

## Beschreibung

Die Erfindung betrifft ein Kühlsystem für Fahrzeuge mit mindestens einem Kühler, gemäß Oberbegriff der Ansprüche 1 und 2.

In Fahrzeugen, beispielsweise Personen- oder Lastkraftwagen, werden zur Kühlung der dort eingesetzten Flüssigkeiten und Gase entsprechende Wärmetauscher, wie zum Beispiel Ladeluftkühler, Kühlmittelkühler oder Kondensator, eingesetzt, die im Frontende des Fahrzeugs, häufig in einem Modulverband, das heißt, in Vorwärtsbewegung des Fahrzeugs gesehen hintereinander, angeordnet sind.

Aus der EP 0 487 098 B1 geht ein Kühlsystem hervor, bei dem der Kühlmittelkühler für das Antriebsaggregat des Fahrzeugs am Ende des Kühlmoduls, also am weitesten entfernt vom Fahrzeugfrontende angeordnet ist. Während der Fahrt wird über das Kühlmodul ein durch einen Staudruck am Fahrzeugfrontende erzeugter Luftstrom geführt. Um auch bei stehendem oder nur langsam fahrendem Fahrzeug dem Kühlmodul den zur Erfüllung der geforderten Kühlleistung notwendigen Luftmassenstrom zuführen zu können, ist stromabseitig vom Kühlmittelkühler im Luftströmungspfad ein Axiallüfter mit Haube vorgesehen, der zur Erzeugung eines über das Kühlmodul strömenden Luftstroms dient. Ab einer bestimmten Fahrgeschwindigkeit ist der Luftstaudruck am Frontende des Fahrzeugs ausreichend groß, um jeden notwendigen Luftmassenstrom bereitzustellen.

Nachteilig bei dem bekannten Kühlsystem ist, dass bei den Fahrzuständen, bei denen der über das Kühlmodul geführte Luftmassenstrom durch den Staudruck am Fahrzeugfrontende erzeugt wird, die Abdeckung der Lüfterhaube und die Lüfternabe als Widerstand wirken, die den durch das Kühlmodul bedingten Druckverlust erhöhen. Ferner deckt die Lüfterhaube aufgrund ihrer fluchtenden Anordnung mit dem Kühler große Bereiche desselben ab, so dass der gesamte Luftmassenstrom durch die Lüfteröffnung strömen muss. Dies führt zu einer inhomogenen Durchströmung des Kühlmittelkühlers, was sich auch auf die vorgeschalteten Wärmetauscher auswirkt; insbesondere wird deren Kühlleistung dadurch reduziert. Die ohnehin vorhandenen Druckverluste werden durch die Inhomogenität des Luftstroms weiter erhöht.

Aus der EP-A-0 919 705 geht ein Kühlsystem der Eingangs genannten Art hervor, das einen Kühler aufweist, der in Abhängigkeit von der Fahrzeuggeschwindigkeit von einem Luftstrom durchsetzt wird. Ein Teilluftstrom kann seitlich umgelenkt und mittels Ventilatoren aus Auslässen ausgeblasen werden. Ein oberer Bereich des Kühlers weist eine Abdeckung mit Klappen auf, sodass dort eine Abströmmöglichkeit für die Luft besteht. Der untere Bereich des Kühlers ist nicht abgedeckt, sodass dort permanent eine Durchströmung stattfindet. Das Dokument EP-A-0 919 705 offenbart damit ein Kühlsystem für Fahrzeuge mit mindestens einem Kühler, dem in einer ersten Betriebsphase über einen ersten Luftströmungspfad ein erster Luftstrom zuführbar ist und der in einer alternativen oder gleichzeitigen zweiten Betriebsphase mittels mindestens einer Luftfördereinrichtung mit einem einen zweiten Luftströmungspfad passierenden, zweiten Luftstrom beaufschlagbar ist, wobei die beiden Luftströmungspfade zumindest bereichsweise derart winklig zueinander stehen, dass die Luftfördereinrichtung außerhalb oder im Wesentlichen außerhalb des ersten Luftströmungspfads liegt, und mit einer Einrichtung zur Steuerung des den Kühler durchströmenden Luftstroms, wobei die Einrichtung - in Richtung des Luftstroms gesehen - im Abströmbereich des Kühlers angeordnet ist und als mindestens eine Abdeckvorrichtung ausgebildet ist, die den Querschnitt des ersten Luftströmungspfads in Abhängigkeit von der gewünschten Betriebsphase sowohl freigeben als auch vollständig abdecken kann, wobei die Abdeckvorrichtung mindestens verschwenkbare Klappen aufweist, die an einem Rahmen angeordnet sind, der mindestens eine Durchgangsöffnung zum Anschluss an eine Einrichtung zur Erzeugung einer Luftströmung des zweiten Luftstroms aufweist.

Es ist Aufgabe der Erfindung, ein Kühlsystem der eingangs genannten Art zu schaffen, bei dem eine allen Betriebsphasen anpassbare Betriebsführung möglich ist und insbesondere eine homogenere Durchströmung des Kühlers bei allen Fahrzuständen/Betriebsphasen des Fahrzeugs gewährleistet werden kann. Ein weiteres Ziel der Erfindung besteht darin, ein Verfahren anzugeben, das eine exakte Steuerung mindestens eines den Kühler durchströmenden Luftmassenstroms bei allen Fahrzuständen ermöglicht.

Zur Lösung der Aufgabe wird ein Kühlsystem mit den Merkmalen des Anspruchs 1 oder des Anspruchs 2 vorgeschlagen.

Es kann vorgesehen sein, dass die beiden Luftströmungspfade zumindest bereichsweise getrennt zueinander ausgebildet sind und sich im Bereich des Kühlers kreuzen oder vereinigen. Mithin sind die beiden Luftströmungspfade abschnittsweise voneinander unabhängig, das heißt notwendige Betriebsmittel, wie beispielsweise eine Luftfördereinrichtung, sind stets dem "eigenen" Luftströmungspfad zugeordnet. Es kann daher dann nicht der Fall auftreten, dass die Luftfördereinrichtung als Strömungshindernis in einem "fremden" Luftströmungspfad wirkt. Da sich die beiden Luftströmungspfade im Bereich des Kühlers kreuzen oder vereinigen, dienen sie beide dazu, dem Kühler Kühlluft zuzuführen.

In bevorzugter Ausführungsform dient der Kühler zum Kühlen des Kühlmittels eines Antriebsaggregats des Fahrzeugs, beispielsweise einer Brennkraftmaschine. Das Kühlsystem kann außer dem Kühler noch mindestens einen weiteren Wärmetauscher umfassen, beispielsweise einen Ladeluftkühler und einen Kondensator einer Heiz- oder Klimaanlage. In diesem Fall sind der/die weitere(n) Wärmetauscher -in Richtung des zugeführten Luftstroms gesehen- vorzugsweise vor dem Kühler angeordnet und zusammen mit diesem zu einem, eine Baueinheit bildenden Kühlmodul gekoppelt, wobei vorzugsweise jeder der Wärmetauscher/Kühler unabhängig von den anderen arbeitet.

Bei einem besonders vorteilhaften Ausführungsbeispiel des Kühlsystems ist der Abströmbereich des Kühlers frei von Einrichtungen zum Erzeugen eines Luftstroms. Das heißt, das Kühlsystem weist anders als die bekannten Kühlsysteme keinen Axiallüfter mit zugehöriger Abdeckung/Haube auf, so dass ein Kühlsystem mit einer geringen Bautiefe realisierbar ist. Nach einer Weiterbildung der Erfindung ist vorgesehen, dass auch der Anströmbereich des Kühlers frei von Gebläsen, Lüftern oder dergleichen zur Erzeugung eines den Kühler durchströmenden Luftstroms ist. Es ist also weder vor noch hinter dem Kühler eine Luftströmungserzeugungs-Einrichtung vorgesehen, dass eine besonders gleichmäßige Durchströmung zumindest des Kühlers gewährleistet werden kann.

In bevorzugter Ausführungsform ist der Kühler im Frontendbereich des Fahrzeugs angeordnet. Der in einer Außenwand des Fahrzeugs vorgesehene, mindestens eine Lufteinlass, über den der während der Fahrt des Fahrzeugs aufgrund eines Staudrucks erzeugte Luftstrom dem Kühler beziehungsweise dem Kühlmodul zugeführt wird, ist hier vorzugsweise im Frontende des Fahrzeugs angeordnet. Bei dieser Anordnung des Kühlers im Fahrzeug ist dieser -in Vorwärtsbewegung des Fahrzeugs gesehen- vor einem Antriebsaggregat des Fahrzeugs angeordnet. Bei einem anderen Ausführungsbeispiel ist der Kühler im Heckendbereich des Fahrzeugs angeordnet, wobei der Lufteinlass in einer Seitenwand des Fahrzeugs vorgesehen sein kann.

Die Abdeckvorrichtung weist mehrere jalousieartig angeordnete Klappen auf. Hierunter ist eine Klappenanordnung zu verstehen, bei der mehrere Klappen parallele Drehachsen aufweisen, wobei die Drehachsen derart eng zueinander liegen, dass sich in der Schließstellung die Klappenenden benachbarter Klappen aneinanderlegen und auf diese Art und Weise wie eine Jalousie eine Abdeckung bewirken. Je nach Öffnungsstellung der Klappen wird der Querschnitt des Luftströmungspfades mehr oder weniger freigegeben.

Weiterhin wird ein Kühlsystem bevorzugt, das sich dadurch auszeichnet, dass die Einrichtung zur Steuerung des ersten Luftstroms mehrere, im ersten Luftströmungspfad angeordnete, in mehrere Stellungen verlagerbare, insbesondere schwenkbare Klappen aufweist, die den ersten Luftströmungspfad in einer ersten Stellung freigeben und in einer zweiten Stellung zumindest teilweise, vorzugsweise vollständig, sperren. Die vorzugsweise lamellenartigen Klappen sind vorzugsweise strömungstechnisch so optimiert, dass sie in ihrer den Luftströmungspfad freigebenden, ersten Stellung den den Kühler durchströmenden Luftstrom praktisch nicht, zumindest nur in einem so geringem Maße beeinflussen, dass der dadurch erzeugte Druckverlust minimal und daher nicht von Bedeutung ist. Die Ausgestaltung der Klappen und deren Anordnung in der Freigabestellung ist also derart, dass die gesamte Kühlerfläche gleichmäßig mit dem Luftstrom beaufschlagt und homogen durchströmt wird.

Züsätzlich zu den erwähnten Klappen ist es auch möglich, dass die Abdeckvorrichtung mindestens ein verstellbares Rollo aufweist. Je nach Stellung des Rollos wird der zugeordnete Luftströmungspfad mehr oder weniger stark abgedeckt/verschlossen. Um zu verhindern, dass das Rollo durch den Luftdruck zu stark ausgelenkt wird, ist bevorzugt eine luftdurchlässige Abstützung, insbesondere ein Stützgitter, vorgesehen. Das Rollo kann sich flächig auf die Abstützung auflegen und wird dadurch auch bei höheren Luftdrücken nicht unzulässig verlagert. Die luftdurchlässige Abstützung ist hinreichend feingliedrig gestaltet, so dass sie die Luftströmung nicht oder nur vernachlässigbar gering beeinflusst.

Nach einer Weiterbildung der Erfindung ist vorgesehen, dass die Abdeckvorrichtung zum Kühler einen Freiraum zur Ausbildung mindestens eines Teiles des zweiten Luftströmungspfads belässt. Dieser Freiraum wird auch in der ersten Betriebsphase von dem ersten Luftstrom durchsetzt, so dass der erste Luftstrom die Kühlerfläche ungehindert durchströmen kann. Wird die zweite Betriebsphase eingenommen, so schließt die Abdeckvorrichtung, so dass der Freiraum hierdurch begrenzt wird. Da die Abdeckvorrichtung jedoch mit Abstand zum Kühler liegt, kann der zweite Luftstrom zur Kühlung des Kühlers wirken, indem er quer zur Richtung des zuvor erwähnten ersten Luftstroms in den Freiraum eingeblasen und/oder aus dem Freiraum herausgesaugt wird, so dass -beispielsweise im Falle des Saugens- angesaugte Luft des zweiten Luftstroms den Kühler durchsetzt, in den Freiraum gelangt, und jetzt nicht aufgrund der geschlossenen Abdeckung in senkrecht auf der Kühlerfläche stehender Richtung abströmen kann, um insbesondere die Brennkraftmaschine des Fahrzeugs zu kühlen, sondern aufgrund der geschlossenen Abdeckvorrichtung den Freiraum seitlich verlässt. Dieses seitliche Verlassen ermöglicht die Installation einer Luftfördereinrichtung seitlich des Kühlers, so dass der erste Luftströmungspfad unbehelligt bleibt, dort also keine Strömungshindernisse liegen. Die Formulierung "dass die Luftfördereinrichtung seitlich des Kühlers liegt" bedeutet, dass der erste Luftströmungspfad keine Hindernisse aufweist, wobei die Luftfördereinrichtung jedoch auch andere Positionen als seitlich einnehmen kann, wenn sie über ein entsprechendes Luftführungsrohr oder dergleichen mit den seitlichen Flächen oder mindestens einer seitlichen Fläche des Freiraumes verbunden ist. Auch in einem solchen Falle ist jedoch dafür Sorge getragen, dass sich die Luftfördereinrichtung nicht störend im ersten Luftströmungspfad befindet.

Insbesondere kann vorgesehen sein, dass zur Ausbildung des Freiraums ein Luftführungskasten vorgesehen ist, der die Abdeckvorrichtung aufweist, deren Abdeckung einem Durchströmungsquerschnitt für den ersten Luftstrom zuordenbar ist. Insbesondere ist seitlich des Durchströmungsquerschnitts mindestens ein Lufteinlass und/oder mindestens ein Luftauslass für den zweiten Luftstrom angeordnet. Bevorzugt verläuft der Querschnitt des mindestens einen Lufteinlasses und/oder des Luftauslasses für den zweiten Luftstrom quer, insbesondere rechtwinklig, zum Durchströmungsquerschnitt des ersten Luftstroms.

Um die Druckverluste bei der Absaugung oder Beblasung zu reduzieren, kann vorgesehen sein, dass der Querschnitt des zweiten Luftstrompfads im Bereich des Lufteinlasses und/oder Luftauslasses vergrößert ist. Insbesondere kann der erwähnte Luftführungskasten als Rahmen ausgebildet sein, wobei sich die Abdeckvorrichtung am Rahmen befindet. Gemäß der Querschnittsvergrößerung im Bereich des Lufteinlasses und/oder Luftauslasses ist die Tiefe des Rahmens am Lufteinlass und/oder Luftauslass gegenüber den anderen Bereichen des Luftführungskastens größer ausgebildet. Die Klappen sind erfindungsgemäß an einem Rahmen angeordnet.

Besonders bevorzugt wird ein Ausführungsbeispiel des Kühlsystems, bei dem die mindestens eine Klappe und/oder das mindestens eine Rollo an dem Rahmen angeordnet ist/sind und mit diesem eine Baueinheit bilden, die derart gestaltet und angeordnet ist, dass sie eine Abdeckung für die -in Richtung des Luftstroms gesehen- Kühlerrückseite bildet. Die Abdeckung weist eine nur geringe Bautiefe auf, die in jedem Fall kleiner als die Bautiefe von bei bekannten Kühlsystemen eingesetzten, eine Abdeckhaube aufweisenden Axiallüfter ist.

Erfindungsgemäß ist in mindestens einem Rahmenteil des Rahmens eine Durchgangsöffnung zum Anschluss an eine seitlich des Kühlers angeordnete Einrichtung zur Erzeugung der zweiten Luftströmung vorgesehen. Die Luftströmungs-Erzeugseinrichtung kann beispielsweise von einem eine Saugluftströmung erzeugenden Gebläse gebildet sein, das zur Verminderung des Betriebsgeräuschs des Kühlsystems beziehungsweise des Fahrzeugs von einer geeigneten Schalldämmung umgeben sein kann. Mit Hilfe der Luftströmungs-Erzeugseinrichtung kann die durch den Kühler beziehungsweise das Kühlmodul erwärmte Luft gezielt aus dem Fahrzeug abgeführt werden. Dies erfolgt insbesondere dann, wenn die Abdeckvorrichtung sich in ihrer Schließ/Sperrstellung (zweite Stellung) befinden. Es wird ohne weiteres deutlich, dass hierzu gegebenenfalls auch mehrere Luftströmungs-Erzeugseinrichtungen eingesetzt werden können, um einen erforderlichen Luftmassenstrom durch den Kühler beziehungsweise das Kühlmodul zu saugen, was insbesondere im Stillstand oder bei nur geringer Geschwindigkeit des Fahrzeugs erfolgt, da bei diesen Fahrzuständen der über den Lufteinlass dem Kühlmodul zugeführte, aufgrund des Staudrucks erzeugte Luftmassenstrom zu gering oder gar nicht vorhanden ist, um jede gewünschte Kühlleistung sicherstellen zu können.

Weitere vorteilhafte Ausführungsbeispiele des Kühlsystems ergeben sich aus den übrigen Unteransprüchen.

Im folgenden wird die Erfindung anhand der Zeichnungen näher erläutert. Dabei zeigen:
- Figur 1: einen Ausschnitt eines Ausführungsbeispiels des erfindungsgemäßen Kühlsystems in schematischer Darstellung;
- Figur 2: eine perspektivische Darstellung eines ersten Ausführungsbeispiels einer schwenkbare Klappen aufweisenden Abdeckung beziehungsweise Abdeckvorrichtung für einen Kühler bei in Freigabestellung angeordneten Klappen;
- Figur 3: eine perspektivische Darstellung der Abdeckung gemäß Figur 2 mit in einer Sperr-/Blockierstellung angeordneten Klappen;
- Figur 4: eine perspektivische Darstellung eines zweiten Ausführungsbeispiels der Abdeckung;
- Figur 5: eine perspektivische Darstellung der Abdeckung gemäß Figur 4 mit Klappenanordnung;
- Figur 6: eine perspektivische Darstellung eines dritten Ausführungsbeispiels der Abdeckung;
- Figur 7: einen Querschnitt durch ein zweites Ausführungsbeispiel des Kühlers mit einer vierten Ausführungsform der Abdeckung;
- Figur 8: einen Querschnitt durch ein drittes Ausführungsbeispiel des Kühlers mit einer fünften Ausführungsform der Abdeckung;
- Figur 9: eine perspektivische Darstellung einer weiteren Abdeckvorrichtung;
- Figur 10: eine Ausführungsvariante der Abdeckvorrichtung gemäß Figur 9;
- Figur 11: die Abdeckvorrichtung der Figur 10 in einer variierten Bauform;
- Figur 12: eine weitere Bauvariante einer Abdeckvorrichtung;
- Figur 13: ebenfalls eine weitere Bauvariante einer Abdeckvorrichtung;
- Figur 14: eine perspektivische Ansicht auf eine als Gebläse ausgebildete Luftströmungs-Erzeugungseinrichtung;
- Figur 15: eine Luftführung zwischen Kühler, insbesondere Kühlerabdeckrahmen, und Gebläse;
- Figur 16: ein anderes Ausführungsbeispiel einer Luftführung;
- Figur 17: eine Ansicht der Luftführung gemäß Figur 15 entlang der Längsachse eines mit Kühlsystem ausgestatteten Fahrzeugs;
- Figur 18: eine Draufsicht auf die Darstellung der Figur 17;
- Figur 19: eine Ansicht einer Luftführung nach einem anderen Ausführungsbeispiel entsprechend der Figur 16 in Richtung der Fahrzeuglängsachse und
- Figur 20: eine Draufsicht auf die Luftführung der Figur 19.

Das im Folgenden beschriebene Kühlsystem 1 ist allgemein für Fahrzeuge 3, zum Beispiel Personenkraftwagen (Pkw), Lastkraftwagen (Lkw), Omnibusse und dergleichen, einsetzbar, die als Antriebsaggregat beispielsweise eine Brennkraftmaschine aufweisen. Das Kühlsystem 1 ist ohne weiteres auch für Elektrofahrzeuge oder Hybridfahrzeuge geeignet.

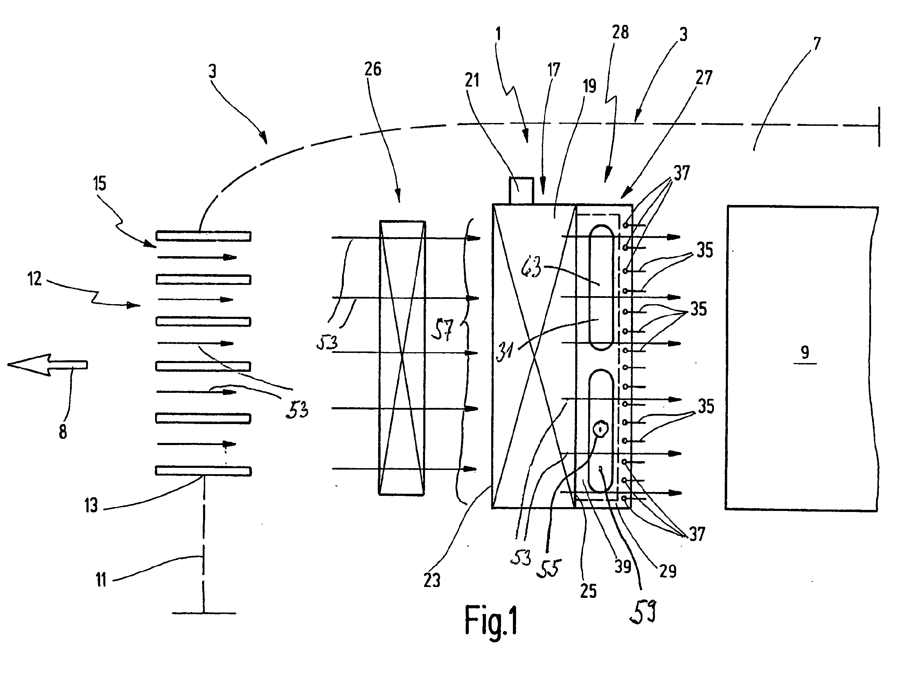

Figur 1 zeigt eine Prinzipskizze eines Ausführungsbeispiels des Kühlsystems 1, das im mit gestrichelter Linie dargestellten Frontende 5 des Fahrzeugs 3 in einem Motorraum 7 angeordnet ist. In Vorwärtsbewegung bewegt sich das Fahrzeug 3 in der Darstellung gemäß Figur 1 von rechts nach links, wie mit einem Pfeil 8 angedeutet. Das Kühlsystem 1 beziehungsweise eine Komponente davon befindet sich, in dem Raum zwischen einer Brennkraftmaschine 9 und einer die Fahrzeugfront bildende Außenwand 11. In der Außenwand 11 ist eine einen Lufteinlass 12 bildende Wandöffnung 13 vorgesehen, in der eine Luftleiteinrichtung 15 angeordnet ist, die dazu dient, während der Fahrt des Fahrzeugs 3 einen mit Pfeilen angedeuteten, hier in horizontaler Richtung verlaufenden ersten Luftstrom 53 entlang eines ersten Luftströmungspfads 57 dem Kühlsystem 1 zuzuführen, worauf im Folgenden noch näher eingegangen wird.

Das Kühlsystem 1 umfasst hier einen ersten Wärmetauscher 17, der von einem Kühler 19 zur Kühlung des Kühlmittels, beispielsweise Wasser, der Brennkraftmaschine 9 gebildet ist. Der Kühler 19 weist einen Anschlussstutzen 21, über den das Kühlmittel in den Kühler 19 gelangt, und mindestens einen weiteren, in der Darstellung gemäß Figur 1 nicht erkennbaren zweiten Anschlussstutzen auf, über den das Kühlmittel wieder zur Brennkraftmaschine 9 geleitet wird. Der Aufbau und die Funktion des Kühlers 19 ist allgemein bekannt, so dass hier nicht näher darauf eingegangen wird. Festzuhalten ist, dass der Kühler 19 von dem über den Lufteinlass 12 zugeführten ersten Luftstrom 53 durchströmt werden kann, wie mit den ersten Luftströmungspfad 57 kennzeichnenden Pfeilen angedeutet, wobei der erste Luftstrom 53 an einer Vorderseite 23 des Kühlers 19 eintritt und auf der gegenüberliegenden Rückseite 25 desselben wieder austritt, ohne im Kühler 19 umgelenkt zu werden. Das heißt, der den Kühler 19 in horizontaler Richtung anströmende und im Wesentlichen senkrecht auf die Kühlervorderseite 23 auftreffende, erste Luftstrom 53 durchströmt den Kühler 19 geradlinig und tritt auf der Kühlerrückseite 25 unter Beibehaltung seiner horizontaler Ausrichtung wieder aus.

Auf der der Brennkraftmaschine 9 gegenüberliegenden Seite ist in dem Bereich zwischen dem Lufteinlass 12 und dem Kühler 19 im ersten Luftströmungspfad 57 ein weiterer Wärmetauscher 26, beispielsweise ein Ladeluftkühler oder ein Kondensator einer Klimaanlage, angeordnet, über den der über den Lufteinlass 12 dem Motorraum 7 zugeführte erste Luftstrom 53 geführt wird beziehungsweise der bei diesem Ausführungsbeispiel des Wärmetauschers 26 diesen durchströmt, wie in Figur 1 mit Pfeilen angedeutet. Der Wärmetauscher 26 und der Kühler 19 können zu einem Kühlmodul gekoppelt sein (nicht dargestellt), das vormontierbar ist. Das Kühlsystem 1 kann außer den in Figur 1 dargestellten Wärmetauschern gegebenenfalls noch weitere Wärmetauscher aufweisen, die vorzugsweise alle zwischen der Außenwand 11 und dem Kühler 19 angeordnet sind. In bevorzugter Ausführungsform ist vorgesehen, dass der Raum zwischen dem Kühler 19 und der Brennkraftmaschine 9 frei von Einrichtungen zur Erzeugung eines Luftstroms durch den Kühler 19 beziehungsweise über das Kühlmodul und von Wärmetauschern des Kühlsystems 1 ist, damit der aus der Kühlerrückseite 25 austretende Luftstrom nicht an einem freien Abströmen gehindert wird.

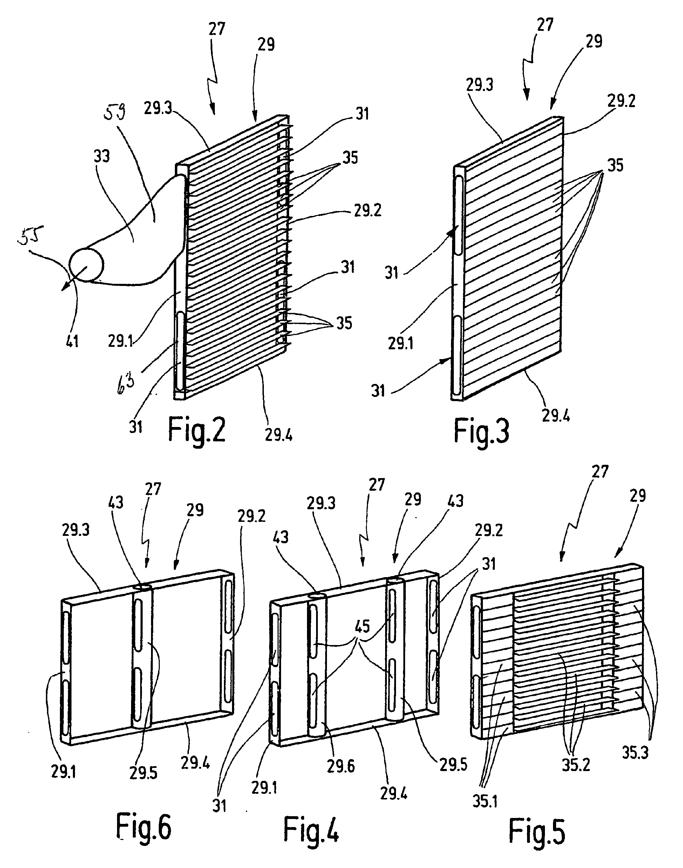

Das Kühlsystem 1 weist ferner eine Einrichtung 28 zur Steuerung des den Kühler 19 durchströmenden Luftstroms auf, die eine auf der Kühlerrückseite 25 angeordnete Abdeckung/Abdeckvorrichtung 27 aufweist. Vorzugsweise ist die Abdeckvorrichtung 27 mit dem Kühler 19 zu einer vormontierbaren Baueinheit verbunden. Die Abdeckvorrichtung 27 umfasst einen Rahmen 29, der -wie aus Figur 2, die eine perspektivische Darstellung der in Figur 1 dargestellten Abdeckvorrichtung 27 zeigt, ersichtlich- bei diesem Ausführungsbeispiel die Form eines Rechtecks aufweist, das in Größe und Form der Kühlerfläche auf dessen Rückseite 25 entspricht. Der Rahmen 29 besteht aus Rahmenteilen 29.1, 29.2, 29.3 und 29.4, wobei in den Rahmenteilen 29.1 und 29.2 jeweils zwei längliche, vorzugsweise strömungsoptimierte Durchgangsöffnungen 31 vorgesehen sind, die einen Querschnitt 63 eines Luftauslasses bilden und an die eine nicht dargestellte, -in Vorwärtsbewegung 8 des Fahrzeugs 3 gesehen- seitlich vom Kühler 19 angeordnete Einrichtung zur Erzeugung einer Luftströmung angeschlossen ist. Hierzu umfasst die Luftströmungs-Erzeugungseinrichtung mindestens ein Gebläse, insbesondere Sauggebläse, beispielsweise Radiallüfter. An die Durchgangsöffnungen 31 ist jeweils eine Saugrohrleitung 33 angeschlossen, von denen in Figur 2 lediglich eine dargestellt ist. Über die Saugrohrleitungen 33 kann die Luft gezielt, insbesondere über den Kühler 19, aus dem Motorraum 7 abgeführt werden. Die jeweilige Saugrohrleitung 33 kann beispielsweise als Schlauch, insbesondere flexibler Schlauch, oder als Kanal mit starren Seitenwänden ausgeführt sein.

Die Abdeckvorrichtung 27 umfasst ferner eine Anzahl von am Rahmen 29 angebrachten Klappen 35, die parallel zueinander verlaufen und jeweils um eine senkrecht zur Bildebenen der Figur 1 verlaufende Achse 37 schwenkbar sind. Hierzu weisen die Klappen 35 an ihren Ende jeweils einen Dreh/Lagerzapfen auf, die sich in entsprechenden Öffnungen in den seitlichen Rahmenteilen 29.1 und 29.2 befinden, wobei die jeweils einer Klappe 35 zugeordneten Durchgangsöffnungen 31 miteinander fluchten. Die Klappen 35 sind innerhalb des Abströmbereichs des Kühlers 19 angeordnet und in mehrere Stellungen schwenkbar.

Bei einem, in den Figuren nicht dargestellten Ausführungsbeispiel sind die Schwenkachsen 37 der Klappen 35 parallel zu den Rahmenteilen 29.1, 29.2 ausgerichtet. Grundsätzlich ist eine beliebige Anordnung der Klappen 35 an der Abdeckung 27 möglich. Wichtig ist, dass der Abströmbereich zumindest im Wesentlichen, vorzugsweise vollständig absperrbar ist.

In den Figuren 1 und 2 sind die Klappen 35 in eine erste Stellung verschwenkt, in der sie den Luftströmungspfad im Abströmbereich des Kühlers 19 freigeben, derart, dass der den Kühler 19 gleichmäßig durchströmende erste Luftstrom 53 nicht beeinflusst, also blockiert oder umgelenkt wird. Dadurch wird sichergestellt, dass von der Abdeckvorrichtung 27 praktisch kein Druckverlust in der Luftströmung erzeugt und die gesamte Kühlerfläche gleichmäßig mit dem Luftstrom beaufschlagt und zumindest im Wesentlichen homogen durchströmt wird.

In Figur 3 sind die Klappen in eine zweite Stellung verschwenkt dargestellt, in der der erste Luftströmungspfad 57 im Abströmbereich des Kühlers 19 vollständig gesperrt beziehungsweise blockiert ist. Das heißt, der erste Luftstrom 53 wird mittels der Abdeckvorrichtung 27 -in Strömungsrichtung des ersten Luftstroms 53 gesehen- hinter dem Kühler 19 gestaut und kann nicht mehr frei abströmen.

Wie aus den Figuren 1 bis 3 ersichtlich, wird bei in Sperrstellung (Figur 3) verschwenkten Klappen 35 ein Freiraum 39 zwischen der Abdeckvorrrichtung/Abdeckung 27 und der Kühlerrückseite 25 begrenzt, der umfangsseitig durch die Rahmenteile 29.1, 29.2, 29.3 und 29.4 vollständig gegenüber dem Motorraum 7 abgeschlossen ist. Der Spalt zwischen dem Kühler 19 und dem Rahmen 29 in deren Verbindungsbereich kann gegebenenfalls mittels einer geeigneten, nicht dargestellten Dichtung abgedichtet sein, damit ein Einströmen von Luft aus dem Motorraum 7 in den Freiraum 39 ausgeschlossen werden kann.

Die Durchgangsöffnungen 31 in den Rahmenteilen 29.1 und 29.2 sind in dem Bereich zwischen den Klappen 35 und der Kühlerrückseite 25 angeordnet, so dass der Freiraum 39 mittels der Luftströmungs-Erzeugungseinrichtung mit einem Unterdruck beaufschlagbar ist, wodurch bei geschlossenen Klappen 35 über das Kühlmodul, also den Wärmetauscher 26 und den Kühler 19, ein definierter, vorzugsweise einstellbarer zweiter Luftstrom 55 entlang eines zweiten Luftströmungspfads 59 gesaugt wird, wie in Figur 2 mit einem Pfeil 41 angedeutet.

Bei dem in den Figuren 1 bis 3 dargestellten Ausführungsbeispiel der Abdeckung 27 sind die daran schwenkbar angebrachten Klappen 35 in geeigneter Weise miteinander zwangsgekoppelt und mittels einer nicht dargestellten Stelleinrichtung automatisch betätigbar. Hierzu weist die Stelleinrichtung einen geeigneten Antrieb auf oder ist mit einem Antrieb einer anderen Vorrichtung des Fahrzeugs 3 gekoppelt. Die Steuerung der Klappenbetätigung erfolgt über eine nicht dargestellte Steuer-/Regeleinrichtung des Kühlsystems 1. Die Klappen 35 werden also alle gemeinsam in Sperrstellung und in Freigabestellung verschwenkt. Nach einer vorteilhaften Ausführungsvariante ist vorgesehen, dass die Stelleinrichtung die Klappen 35 mittels des Antriebs in ihre Sperrstellung (Figur 3) verschwenkt, wobei deren Rückstellung in ihre Freigabestellung selbstständig durch mindestens ein Federelement erfolgt und zwar dann, wenn ein bestimmter Staudruck des ersten Luftstroms 53 unterschritten wird. Selbstverständlich ist es auch möglich, dass alle Klappen 35 mittels des Antriebs der Stelleinrichtung sowohl in ihre Sperr- als auch in ihre Freigabestellung verschwenkt werden.

Die aus den Figuren 1 bis 3 hervorgehende Abdeckung 27 weist eine nur geringe, platzsparende Bautiefe auf. Festzuhalten bleibt noch, dass sich zwischen der Abdeckung 27 und der Brennkraftmaschine 9 keine, den Luftstrom durch den Kühler 19 beeinflussende Einbauten befinden, so dass der aus der Kühlerrückseite 25 austretende Luftstrom auf die Brennkraftmaschine 9 auftrifft und diese gegebenenfalls umströmt.

Aus der Beschreibung zu den Figuren 1 bis 3 ergibt sich ein Verfahren zum Steuern des den Kühler 19 durchströmenden Luftmassenstroms während unterschiedlicher Betriebsphasen beziehungsweise Fahrzuständen des Fahrzeugs 3 ohne weiteres. Es sieht vor, dass während einer ersten Betriebsphase des Fahrzeugs 3, nämlich während der Vorwärtsfahrt und ab einer bestimmten, vorgegeben Fahrgeschwindigkeit, dem Kühler 19 über den Lufteinlass 12 ein erster, aufgrund des Staudrucks erzeugter, freier Luftstrom 53 zugeführt wird, der den Kühler 19 von seiner Vorderseite 23 her durchströmt. Hierzu werden die innerhalb des ersten Luftströmungspfads 57 im Abströmbereich des Kühlers 19 angeordneten Klappen 35 in ihre Freigabestellung (Figuren 1 und 2) verschwenkt, in der sie mit ihrer Schmalseite in Strömungsrichtung gerichtet im ersten Luftströmungspfad 57 stehen und dadurch praktisch keinen Widerstand für den den Kühler 19 durchströmenden ersten Luftstrom 53 bieten, so dass dieser gleichmäßig durchströmt wird. Vorteilhaft ist ferner, dass aufgrund des einbautenfreien, ersten Luftströmungspfads 57 im Abströmbereich bereits bei einer relativ geringen Fahrgeschwindigkeit des Fahrzeugs 3 der den Kühler 19 durchströmende Luftmassenstrom so groß ist, dass jede erforderliche Kühlleistung realisiert werden kann. Während einer zweiten Betriebsphase des Fahrzeugs 3, in der dieses sich im Stillstand oder nur mit geringer Geschwindigkeit in einer Vorwärtsbewegung befindet, werden die Klappen 35 in ihre Sperrstellung verschwenkt, in der sie den ersten Luftströmungspfad 57 im Abströmbereich des Kühlers 19 vollständig blockieren. Mit Hilfe der außerhalb des ersten Luftströmungspfads 57 angeordneten Lufterzeugungs-Einrichtung wird ein zweiter, einstellbarer Luftstrom 55 über den Kühler 19 entlang des zweiten Luftströmungspfads 59 gesaugt, so dass auch bei nicht-staudruckdominierten Fahrzuständen der zur Erfüllung einer gewünschten Kühlleistung erforderliche Luftmassenstrom den Kühler 19 durchströmt. Im Anströmbereich des Kühlers 19 bilden sich die beiden Luftströmungspfade 57 und 59 zumindestens abschnittsweise gleich aus; im Abströmbereich des Kühlers 19 liegen unterschiedliche Wege der beiden Luftströmungspfade 57 und 59 vor.

Aufgrund der Anordnung der Abdeckung 27 zwischen Kühler 19 und Brennkraftmaschine 9 ergibt sich in vorteilhafter Weise die Möglichkeit, die Aufwärmung des den Kühler 19 durchströmenden Kühlmittels während der Kaltstartphase zu beschleunigen. Hierzu werden die Klappen 35 in ihre Sperr-/Schließstellung verschwenkt, wodurch der erste Luftströmungspfad 57 abgesperrt ist. Während der Kaltstartphase findet ferner auch keine Absaugung des Freiraums 39 statt. Dadurch staut sich die Luft am Kühler 19, wodurch dieser eine entsprechend geringe Kühlleistung aufweist. Dadurch wird das Kühlmittel schneller erwärmt.

Figur 4 zeigt ein zweites Ausführungsbeispiel der Abdeckung 27, wobei die Klappen 35 nicht dargestellt sind, die sich von der anhand der Figuren 1 bis 3 beschriebenen Abdeckung 27 insbesondere dadurch unterscheidet, dass zwischen den die Seitenwände der Abdeckung 27 bildenden Rahmenteilen 29.1, 29.2 weitere Rahmenteile 29.5 und 29.6 vorgesehen sind, die parallel zu den Rahmenteilen 29.1, 29.2 verlaufen. Wie aus Figur 5 ersichtlich, sind an den Rahmenteilen 29.1 und 29.6 eine erste Anzahl von Klappen 35.1, an den Rahmenteilen 29.6 und 29.5 eine zweite Anzahl von Klappen 35.2 sowie an den Rahmenteilen 29.5 und 29.2 eine dritte Anzahl von Klappen 35.3 schwenkbeweglich gehalten. Die jeweils einem Teilbereich der Kühlerfläche zugeordneten Klappen 35.1 bis 35.3 sind unabhängig voneinander schwenkbar, so dass nur Teilbereiche der Abdeckung 27 geschlossen werden können, wodurch der Luftströmungspfad nur teilweise blockiert wird. Es ist daher möglich, dass der über das Kühlmodul geführte Luftmassenstrom sich aus einer Kombination von Staudruckströmung und Absaugung über die Durchgangsöffnungen 31 ergibt.

In Figur 5 sind die im mittleren Bereich des Luftströmungspfads angeordneten Klappen 35.2 in ihre Freigabestellung verschwenkt, während die außenliegenden Klappen 35.1 und 35.3 geschlossen sind und den Luftströmungspfad in diesen Bereichen blockieren. Bei diesem Ausführungsbeispiel ist vorgesehen, dass die von den Klappen 35.2 abdeckbare Kühlerfläche größer ist als die mittels der Klappen 35.1 und 35.3 abdeckbare Kühlerfläche. Die Klappen 35.3 weisen hierzu eine entsprechend größere Länge auf. Wenn alle Klappen 35.1 bis 35.3 in ihre Sperrstellung verschwenkt sind, ist der Luftströmungspfad vollständig blockiert. Selbstverständlich sind auch andere Längen der Klappen 35.1 bis 35.3 realisierbar, als die in den Figuren dargestellten.

Wie in Figur 4 angedeutet, ist in die Rahmenteile 29.5 und 29.6 jeweils ein Absaugkanal 43 integriert, die das obere Rahmenteil 29.3 durchdringen und an die die Einrichtung zur Erzeugung einer Saugströmung anschließbar ist. Die Absaugkänäle 43 sind über Öffnungen 45 mit dem Freiraum 39 verbunden. Die zusätzlichen Rahmenteile 29.5 und 29.6 verbessern auch die Steifigkeit der Abdeckung 27.

Figur 6 zeigt ein weiteres Ausführungsbeispiel der Abdeckung 27, wobei die Klappen 35 nicht dargestellt sind. Die Abdeckung 27 unterscheidet sich von den anhand der Figuren 4 und 5 beschrieben Abdeckungen 27 dadurch, dass in der Mitte zwischen den Rahmenteilen 29.1 und 29.2 sich lediglich ein weiteres Rahmenteil 29.5 befindet, das einen Absaugkanal 43 aufweist. Zwischen den Rahmenteilen 29.1 und 29.5 werden eine erste Anzahl von Klappen und an den 29.5 und 29.2 eine zweite Anzahl von Klappen schwenkbeweglich gehalten, wie bei dem in Figur 5 dargestellten Ausführungsbeispiel, die jeweils unabhängig voneinander schwenkbar, so dass bei Bedarf nur Teile der Abdeckung 27 verschlossen werden können.

Es bleibt festzuhalten, dass die Abdeckung 27 ohne weiteres auch derart ausgebildet sein kann, dass mehr als drei Teilbereiche unhängig voneinander verschlossen und geöffnet werden können. Bei den anhand der Figuren 4 bis 6 beschriebenen Ausführungsbeispielen sind diese Teilbereiche -in Richtung des Luftstroms gesehen- nebeneinander angeordnet und erstrecken sich über die gesamte Höhe des Luftströmungspfads. Selbstverständlich ist es auch möglich, die Abdeckung 27 so auszubilden, dass in mindestens einem dieser Teilbereiche die darin angeordneten Klappen 35 so schwenkbar sind, das nur ein Ausschnitt dieses Teilbereichs verschlossen ist, während die in einem anderer Ausschnitt angeordneten Klappen sich in Freigabestellung befinden.

Sofern bei den anhand der Figuren 4 bis 6 beschriebenen Ausführungsbeispiel der Abdeckung 27 die Schwenkachsen 37 der Klappen 35 parallel zu den Rahmenteilen 29.1, 29.2 verlaufen, kann auf die zusätzlichen Rahmenteile 29.5 beziehungsweise 29.5 und 29.6 verzichtet werden. Dennoch ist es ohne weiteres realisierbar, dass Teile der Klappen 35 unabhängig voneinander verlagerbar sind, so dass beispielsweise nur bestimmte Bereiche des Abströmbereichs geschlossen sind, während andere so im Luftströmungspfad angeordnet sind, dass der Luftstrom zwischen den Klappen 35 hindurchströmen kann. Dieses Ausführungsbeispiel der Abdeckung 27 weist gegenüber den oben beschriebenen eine reduzierte Anzahl von Teilen auf.

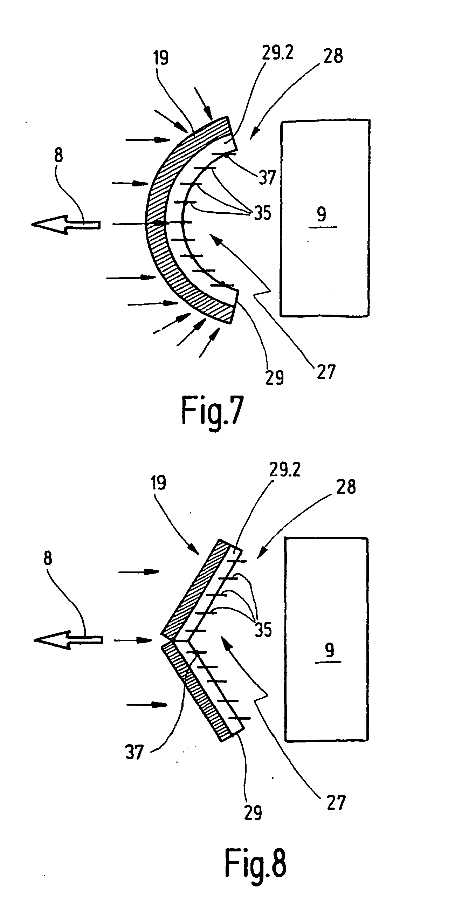

Figur 7 zeigt in schematischer Darstellung ein weiteres Ausführungsbeispiel des Kühlers 19 und der Abdeckung 27 im Querschnitt. Gleiche Teile sind mit gleichen Bezugszeichen versehen, so dass auf die Beschreibung zu den Figuren 1 bis 6 verwiesen wird. Der Kühler 19 weist eine gekrümmte Form auf, wobei die Krümmung in Richtung der Vorwärtsbewegung 8 des Fahrzeugs 3 zeigt. Auf der Kühlerrückseite 25 ist die Abdeckung 27 vorgesehen, deren Rahmen 29 an die Form des Kühlers 19 beziehungsweise der im Luftströmungspfad angeordneten, vom Luftstrom durchströmbaren Kühlerfläche angepasst ist. Es ist ersichtlich, dass auch bei dieser Form des Kühlers 19 eine geringe Bautiefe realisierbar ist, was bei einer Anordnung eines Axiallüfters im Abströmbereich des Kühlers, wie bei bekannten Kühlsystemen vorgesehen, nicht möglich wäre.

In Abweichung zu dem in Figur 7 dargestellten Ausführungsbeispiel können auch andere gekrümmte Formen des Kühlers 19, beispielsweise beliebige Freiformen realisiert werden, die eine optimale, vorzugsweise platzsparende und an den vorhandenen Bauraum ideal angepasste Anordnung des Kühlers 19 im Motorraum ermöglichen. Der eine Krümmung aufweisende Kühler und die an die Kühlerform angepasste Abdeckung können auch quer zur Fahrzeuglängserstreckung verlaufen. Andere Anordnungen sind möglich.

Figur 8 zeigt in schematischer Darstellung ein drittes Ausführungsbeispiel des Kühlers 19 und der Abdeckung 27 im Querschnitt. Teile, die bereits anhand der vorangegangenen Figuren beschrieben wurden, sind mit gleichen Bezugszeichen versehen. Der Kühler 19 weist eine keilförmige Kontur aufweist, wobei die Keilspitze in Richtung der Vorwärtsbewegung 8 des Fahrzeugs 3 zeigt. Der Rahmen 29 der auf der Kühlerrückseite 25 vorgesehene Abdeckung 27 ist an die Form des Kühlers 19 angepasst und weist ebenfalls eine keilförmige Form auf, was durch entsprechend abgewinkelte seitliche Rahmenteile 29.1 und 29.2 realisiert ist. Auch diese Bauform weist nur eine geringe Bautiefe auf. Die Ausrichtung des Kühlers und der Abdeckung kann auch so gewählt sein, dass die Keilspitze entgegen der Fahrrichtung bei Vorwärtsfahrt gerichtet ist, also genau in entgegengesetzter Richtung als bei dem in Figur 8 dargestellten Ausführungsbeispiel.

Die Klappen 35 der in den Figuren 7 und 8 dargestellten Abdeckungen 27 sind um jeweils eine senkrecht zur Bildebene und parallel zur gedachten Horizontalen verlaufende Achse 37 schwenkbar. In den Figuren 7 und 8 sind sie in ihre Freigabestellung verschwenkt. In der Schließ-/Sperrstellung sind die Klappen 35 nicht senkrecht zu dem den Kühler 19 durchströmenden Luftstrom angeordnet, wie bei dem anhand der Figuren 1 bis 3 beschriebenen Ausführungsbeispiel, sondern schräg, wobei eine vollständige Blockierung des ersten Luftströmungspfads 57, gegebenenfalls durch entsprechend gekrümmte Klappen 35 dennoch sichergestellt werden kann.

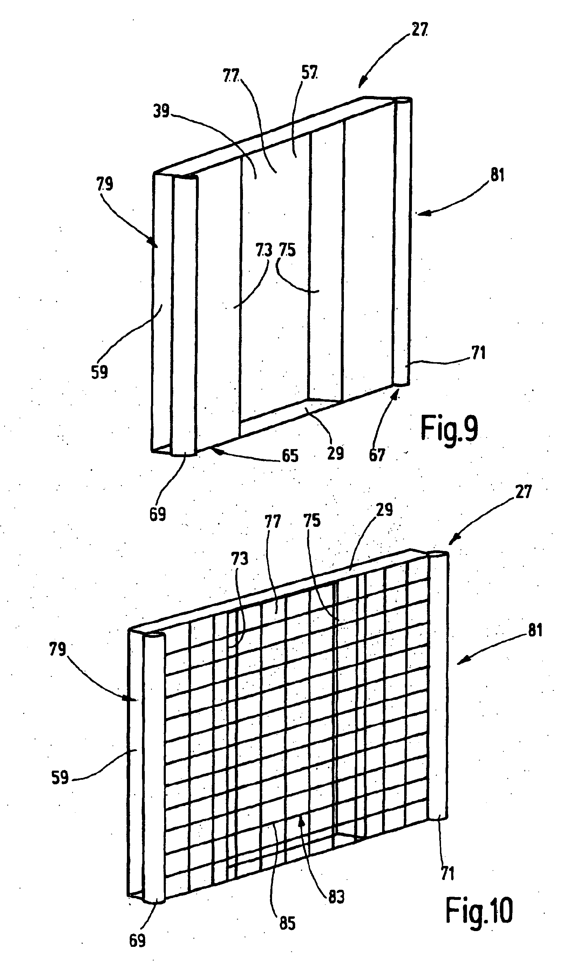

Im Ausführungsbeispiel der Figur 9 ist eine Abdeckvorrichtung 27 gezeigt, die rahmenartig aufgebaut ist und im Bereich ihrer vertikalen Seiten 65, 67 jeweils einen Rollokasten 69, 71 aufweist. Aus den Rollokästen 69, 71 sind in Richtung aufeinander zu Rollos 73, 75 herausziehbar beziehungsweise mittels einer geeigneten Antriebsvorrichtung herausfahrbar. Dies kann stufenlos erfolgen. Mithin lässt sich der Durchströmungsquerschnitt 77 des ersten Luftströmungspfades 57 entsprechend der Stellungen der Rollos 73, 75 in der Größe einstellen. Zum nicht dargestellten Kühler hin weisen die Rollos 73, 75 zur Ausbildung des Freiraumes 39 einen Abstand auf, so dass im Bereich der beiden Seiten 65 und 67 Querschnitte 79 und 81 des zweiten Luftströmungspfads 59 ausgebildet werden. Die Funktionsweise im Betrieb entspricht der Funktionsweise der mit Klappen versehenen Abdeckvorrichtung 27, so dass hierauf nicht näher eingegangen werden muss.

Das Ausführungsbeispiel der Figur 10 zeigt eine ebenfalls mit Rollos 73, 75 ausgestattete Abdeckvorrichtung 27, die sich von der Figur 9 nur dadurch unterscheidet, dass für die beiden Rollos 73 und 75 eine luftdurchlässige Abstützung 83 in Form eines Stützgitters 85 vorgesehen ist. Die Abstützung 83 liegt stromabwärts zum entsprechenden Rollo 73, 75, so dass die Stützfunktion .erreicht wird und das entsprechende Rollo 73, 75 nicht aufgrund des Luftdruckes verformt oder verlagert werden kann.

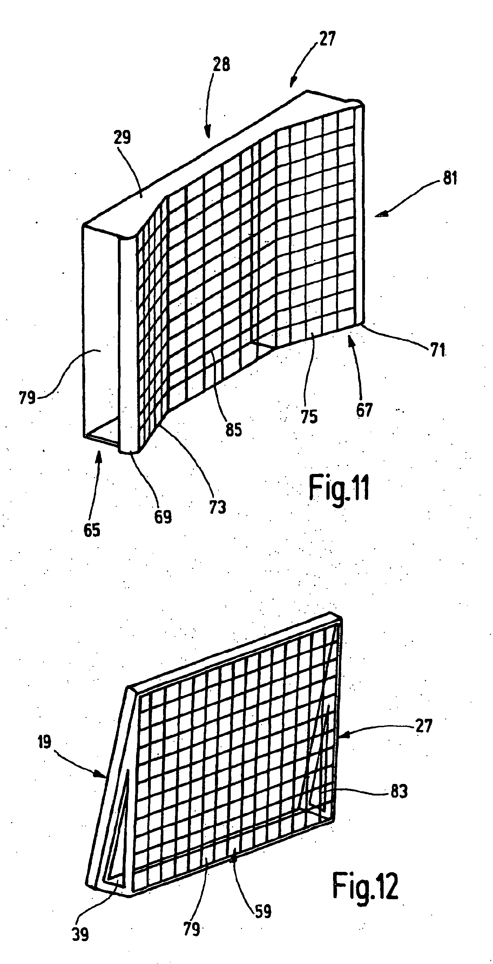

Das Ausführungsbeispiel der Figur 11 zeigt eine Abdeckvorrichtung 27, die der Ausgestaltung der Figur 10 weitestgehend entspricht. Unterschiedlich ist lediglich, dass im Bereich der Seiten 65 und 67 eine Aufweitung der Querschnitte 79 und 81 mit zunehmender Entfernung von der Mitte der Abdeckvorrichtung 27 erfolgt, wodurch besonders niedrige Druckverluste erzielt werden. Im Falle der Erzeugung des zweiten Luftstroms durch Absaugung werden somit die Druckverluste in der Absaugung reduziert und es erfolgt eine Vergrößerung der für die Absaugung vorgesehenen Fläche aufgrund des tieferen Baus der Luftführung an den Seiten der Einrichtung 28. Diese Querschnittsverbreiterung kann -im Längsschnitt gesehen- durch entsprechende Schrägstellung der zugehörigen Flächen erfolgen; es ist jedoch auch möglich, beispielsweise Kreissegmente mit entsprechenden Radien einzusetzen.

Das Ausführungsbeispiel der Figur 12 berücksichtigt die neue Passantenschutzverordnung, für die es notwendig werden kann, dass der Kühler 19 in der Höhe kleiner zu bauen oder schräg zu stellen ist. Die Anordnung ist derart getroffen, dass das Stützgitter und/oder die nicht näher dargestellte, geöffnete Abdeckung, zum Beispiel die Rollos, in vertikaler Ebene stehen, während der Kühler 19 geneigt verläuft, so dass sich ein Freiraum 39 einstellt, der im oberen Bereich in seiner Tiefe abnimmt und nach unten hin immer größer wird. Unten liegt dann auch dementsprechend der Querschnitt 79 zur Ausbildung des zweiten Luftströmungspfads 59 für den zweiten Luftstrom 55.

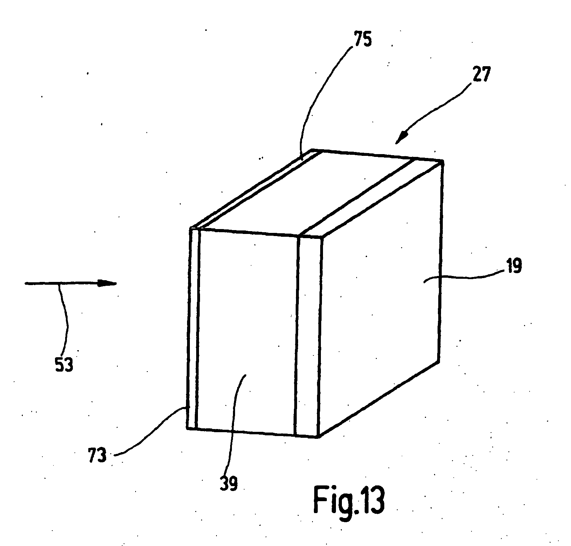

Die Figur 13 zeigt eine Abdeckvorrichtung 27, bei der der Kühler 19 in Bezug auf die Richtung des ersten Luftstroms 53 stromabwärts zur Abdeckvorrichtung 27 liegt, das heißt die Anströmung vom ersten Luftstrom 53 erfolgt derart, dass er zunächst auf den Freiraum 39 trifft (sofern die Abdeckung nicht geschlossen ist) und dann den Kühler 19 durchsetzt. Wird die Abdeckung geschlossen, so ist vorzugsweise eine Luftstromerzeugungseinrichtung vorgesehen, die nicht saugt sondern bläst, das heißt, sie bläst seitlich in den Freiraum 39 ein, so dass der Kühler 19 vom Freiraum 39 her mit Kühlluft beschickt wird, die den Kühler 19 durchsetzt und dann vorzugsweise zur sich dort anschließenden Brennkraftmaschine 9 (nicht dargestellt) gelangt.

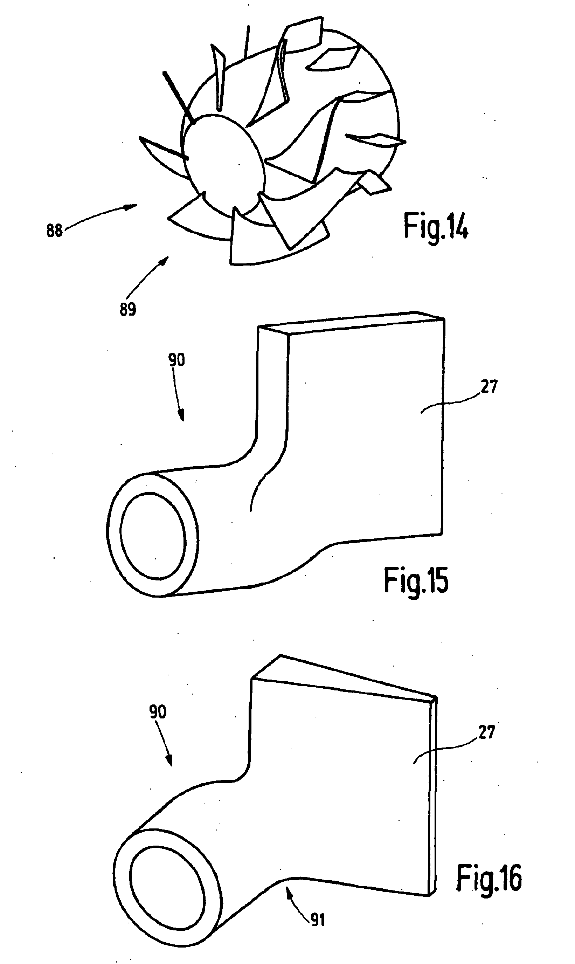

Die Figur 14 zeigt ein Gebläse 88, das die Luftstromerzeugungseinrichtung beziehungsweise eines von mehreren Baugliedern der Luftstromerzeugungseinrichtung bildet. Das dort dargestellte Gebläse 88 ist als Rohrlüfter 89 ausgebildet, der ein Gleichdrucklaufrad mit nachgeschaltetem Leitrad aufweist. Ein die genannten Räder umgebendes Gehäuse ist in Figur 14 der Einfachheit halber nicht dargestellt.

Alternativ kann als Gebläse 88 auch die Bauform als Radiallüfter eingesetzt werden (nicht dargestellt). Sowohl im Falle des erwähnten Rohrlüfters als auch im Falle des erwähnten Radiallüfters beträgt der Laufraddurchmesser etwa 30 bis 60 % der Vertikalabmessung des Kühlers, insbesondere der vertikalen Abmessung des Kühlernetzes (aktive Elemente des Kühlers).

Das Gebläse 88 kann sowohl als drückender, als auch als saugender Lüfter realisiert sein.

Der Einbauort des Gebläses 88 beziehungsweise Lüfters ist bevorzugt seitlich oder im Wesentlichen seitlich des Kühlers 19 vorgesehen, wobei die Orientierung der dadurch erzeugten Luftströmung entweder parallel oder rechtwinklig zu der Längsachse eines das Kühlsystem 1 aufweisenden Fahrzeugs ausgerichtet ist. Zwischen dieser Parallelstellung oder rechtwinkligen Stellung ist auch ein dazwischen liegender Winkel denkbar, den die erzeugte Strömung zur Fahrzeuglängsachse einschließt.

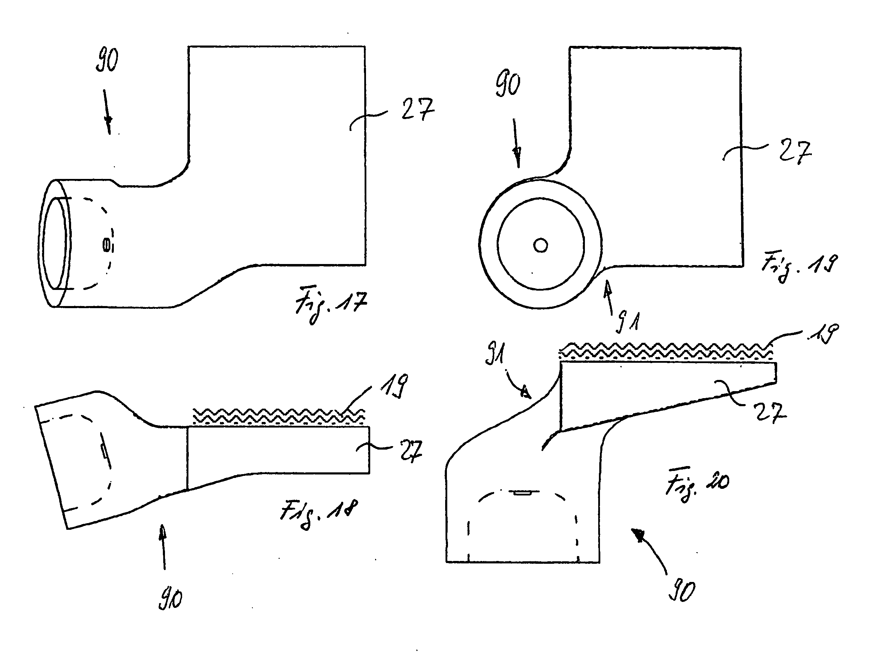

Die Figuren 15, 17 und 18 einerseits sowie 16, 19 und 20 andererseits zeigen konstruktive Luftführungsausgestaltungen unterschiedlicher Bauart, wobei beim Ausführungsbeispiel der Figuren 15, 17 und 18 die Luftströmung rechtwinklig zur Fahrzeuglängsachse verläuft und beim Ausführungsbeispiel der Figuren 16, 19 und 20 eine Luftführung vorliegt, die parallel zur Fahrzeuglängsachse steht. Die Figuren 15 bis 20 zeigen Luftführungen 90 mit Sitz für das Gebläse jeweils nur für eine Hälfte des Kühlers 19. Die jeweilige Luftführung 90 ist zwischen dem Kühler 19 beziehungsweise dem Kühlerabdeckrahmen und dem Gebläse 88 als speziell gestalteter Kanal ausgeführt. Aus den Figuren 15 bis 20 ist jeweils die dem Kühler 19 zugeordnete Abdeckung 27 erkennbar, von der die jeweilige Luftführung 90 ausgeht. Aus den vorstehend genannten Figuren wird erkennbar, dass die als Kanal ausgebildete Luftführung 90 jeweils im unteren Bereich der Abdeckung 27 liegt. Alternativ ist es natürlich auch denkbar, dass eine mittige Anordnung oder eine Anordnung im oberen Bereich vorgesehen sein kann. Aus den genannten Figuren ist ferner erkennbar, dass einer Abdeckung 27 nur ein Kanal zugeordnet ist. Es ist selbstverständlich auch denkbar, dass mehrere Kanäle zu einer Abdeckung 27 führen, wobei mehreren Kanälen ein Gebläse oder jedem Kanal jeweils ein Gebläse zugeordnet sein kann/können. Um eine Ausrichtung des Kanals in Richtung der Fahrzeuglängsachse herbeizuführen ist beim Ausführungsbeispiel der Figuren 16, 19 und 20 jeweils eine Umlenkzone für die Luftströmung vorgesehen. Bei den Ausführungsbeispielen der Figuren 15, 17 und 18 ist diese Umlenkung nicht erforderlich, da die Kanalrichtung quer zur Fahrzeuglängsachse steht.

Bei allen Ausführungsbeispielen kann in Bezug auf den der Luftführung dienenden Kanal zwischen Kühlerabdeckung und Lüfter/Gebläse mindestens eine Einrichtung zur Verbesserung der Strömung, insbesondere Leitbleche, vorgesehen sein.

Zusätzlich ist es möglich, nach dem Gebläse/Lüfter einen Strömungskanal oder mehrere Strömungskanäle vorzusehen, um eine gezielte Führung der Luftströmung aus dem Motorraum des Fahrzeugs heraus vornehmen zu können. Dieser zusätzliche Strömungskanal beziehungsweise diese zusätzlichen Strömungskanäle stromabwärts des Lüfters/Gebläses können ferner dazu benutzt werden, Luft zielgerichtet auf spezifische Komponenten des Motorraums zu richten.

## Patentansprüche

1. Kühlsystem (1) für Fahrzeuge mit mindestens einem Kühler (19), dem in einer ersten Betriebsphase Ober einen ersten Luftströmungspfad (57) ein erster Luftstrom (53) zuführbar ist und der in einer alternativen oder gleichzeitigen zweiten Betriebsphase mittels mindestens einer Luftfördereinrichtung mit einem einen zweiten Luftitrömungspfad (59) passierenden, zweiten Luftstrom (55) beaufschlagbar ist, wobei die beiden Luftströmungspfade (57,59) zumindest bereichsweise derart winklig zueinander stehen, dass die Luftfördereinrichtung außerhalb oder im Wesentlichen außerhalb des ersten Luftströmungspfads (57) liegt, und mit einer Einrichtung (28) zur Steuerung des den Kühler (19) durchströmenden Luftstroms, wobei die Einrichtung (28) -In Richtung des Luftstroms gesehen- im Abströmbereich oder Anströmbereich des Kühlers (19) angeordnet ist und als mindestens eine Abdeckvorrichtung (27) ausgebildet ist, die den Querschnitt des ersten Luftströmungspfads (57) mittels eines Steilantriebs verstellbar in Abhängigkeit von der gewünschten Betriebsphase sowohl freigeben als auch vollständig abdecken kann, wobei die Abdeckvorrichtung (27) mehrere jalousieartig angeordnete Klappen (35) aufweist und die Steuerung der Klappenbetätigung über eine Steuer-/Regeleinrichtung des Kühlsystems erfolgt und die Klappen (35) an einem Rahmen (29) angeordnet sind, der mindestens eine Durchgangsöffnung (31) zum Anschluss an eine Einrichtung zur Erzeugung einer Luftströmung des zweiten Luftstroms aufweist.

2. Kühlsystem (1) für Fahrzeuge mit mindestens einem Kühler (19), dem in einer ersten Betriebsphase über einen ersten Luftströmungspfad (57) ein erster Luftstrom (53) zuführbar ist und der in einer alternativen oder gleichzeitigen zweiten Betriebsphase mittels mindestens einer Luftfördereinrichtung mit einem einen zweiten Luftströmungspfad (59) passierenden, zweiten Luftstrom (55) beaufschlagbar ist, wobei die beiden Luftströmungspfade (57,59) zumindest bereichsweise derart winklig zueinander stehen, dass die Luftfördereinrichtung außerhalb oder im Wesentlichen außerhalb des ersten Luftströmungspfads (57) liegt, und mit einer Einrichtung (28) zur Steuerung des den Kühler (19) durchströmenden Luftstroms, wobei die Einrichtung (28) -in Richtung des Luftstroms gesehen- im Abströmbereich oder Anströmbereich des Kühlers (19) angeordnet ist und als mindestens eine Abdeckvorrichtung (27) ausgebildet ist, die den Querschnitt des ersten Luftströmungspfads (57) mittels eines Stellantriebs verstellbar in Abhängigkeit von der gewünschten Betriebsphase sowohl freigeben, teilweise abdecken als auch vollständig abdecken kann, wobei die Abdeckvorrichtung (27) mehrere jalousieartig angeordnete Klappen (35) aufweist und die Steuerung der Klappenbetätigung über eine Steuer-/Regelelnrichtung des Kühlsystems erfolgt und die Klappen (35) an einem Rahmen (29) angeordnet sind, der mindestens eine Durchgangsöffnung (31) zum Anschluss an eine Einrichtung zur Erzeugung einer Luftströmung des zweiten Luftstroms aufweist.

3. Kühlsystem nach Anspruch 1 oder 2, **dadurch gekennzeichnet, dass** die beiden Luftströmungspfade (57,59) zumindest bereichsweise getrennt zueinander ausgebildet sind und sich nur im Bereich des Kühlers (19) kreuzen oder vereinigen.

4. Kühlsystem nach einem der vorhergehenden Ansprüche, **dadurch gekennzeichnet, dass** der Kühler (19) einer Brennkraftmaschine (9) des Fahrzeugs zugeordnet ist, wobei dem Kühler (19) über mindestens einen in einer Außenwand (11) des Fahrzeugs (3) vorgesehenen Lufteinlass (12) der erste Luftstrom zuführbar ist.

5. Kühlsystem nach einem der vorhergehenden Ansprüche, **dadurch gekennzeichnet dass** der Abströmbereich des Kühlers (19) frei von Einrichtungen zum Erzeugen eines Luftstroms ist.

6. Kühlsystem nach einem der vorhergehenden Ansprüche, **dadurch gekennzeichnet, dass** der Kühler (19) im Frontendbereich (5) oder im Heckendbereich des Fahrzeugs (3) angeordnet ist.

7. Kühlsystem nach Anspruch 6, **dadurch gekennzeichnet, dass** der Kühler (19) -in Richtung der Vorwärtsbewegung (8) des Fahrzeugs (3) gesehen- vor einem Antriebsaggregat (9) des Fahrzeugs (3) angeordnet ist.

8. Kühlsystem nach einem der vorhergehenden Ansprüche 2 bis 7, **dadurch gekennzeichnet, dass** die Einrichtung (28) zur Steuerung des ersten Luftstroms mehrere, im ersten Luftströmungspfad angeordnete, in mehrere Stellungen schwenkbare Klappen (35) aufweist, die den ersten Luftströmungspfad in einer ersten Stellung freigeben und in einer zweiten Stellung zumindest teilweise, vorzugsweise vollständig sperren.

9. Kühlsystem nach einem der vorhergehenden Ansprüche, **dadurch gekennzeichnet, dass** bei in die erste Stellung verschwenkten Klappen (35) die gesamte Kühlerfläche des Kühlers (19) gleichmäßig mit dem ersten Luftstrom beaufschlagt und im Wesentlichen homogen durchströmt wird.

10. Kühlsystem nach einem der vorhergehenden Ansprüche, **dadurch gekennzeichnet, dass** eine erste Anzahl der Klappen (35) einem ersten Teilbereich und mindestens eine zweite Anzahl der Klappen (35) mindestens einem zweiten Teilbereich des Kühlers (19) zugeordnet sind, und dass die erste und zweite Anzahl der Klappen (35) unabhängig voneinander verlagerbar/verschließbar sind.

11. Kühlsystem nach einem der vorhergehenden Ansprüche, **dadurch gekennzeichnet, dass** zumindest ein Teil der Klappen (35) parallel zueinander verlaufen und vorzugsweise um jeweils eine parallel oder im Wesentlichen parallel zu einer gedachten Horizontalen oder Vertikalen verlaufenden Achse (37) schwenkbar sind.

12. Kühlsystem nach einem der vorhergehenden Ansprüche, **dadurch gekennzeichnet, dass** die Abdeckvorrichtung (27) von mindestens zwei, beim Schließen aufeinander zu verstellbaren Rollos (73,75) gebildet ist.

13. Kühlsystem nach einem der vorhergehenden Ansprüche 1, 2 oder 12, **dadurch gekennzeichnet, dass** dem/jedem Rollo eine luftdurchlässige Abstützung (83); insbesondere ein Stützgitter (85), zugeordnet ist.

14. Kühlsystem nach einem der vorhergehenden Ansprüche, **dadurch gekennzeichnet, dass** die Abdeckvorrichtung (27) zum Kühler (19) einen Freiraum (39) zur Ausbildung mindestens eines Teils des zweiten Luftströmungspfads (59) belässt.

15. Kühlsystem nach Anspruch 14, **dadurch gekennzeichnet, dass** zur Ausbildung des Freiraums (39) ein Luftführungskasten vorgesehen ist, der die Abdeckvorrichtung (27) aufweist, deren Abdeckung einem Durchströmungsquerschnitt für den ersten Luftstrom (53) zuordenbar ist.

16. Kühlsystem nach Anspruch 15, **dadurch gekennzeichnet, dass** seitlich des Durchströmungsquerschnitts mindestens ein Lufteinlass und/oder mindestens ein Luftauslass für den zweiten Luftstrom (55) angeordnet ist/sind.

17. Kühlsystem nach Anspruch 16, **dadurch gekennzeichnet, dass** der Querschnitt des Lufteinlasses und/oder des Luftauslasses für den zweiten Luftstrom (55) quer, insbesondere rechtwinklig, zum Durchströmungsquerschnitt des ersten Luftstroms (53) verläuft.

18. Kühlsystem nach einem der vorhergehenden Ansprüche 16 oder 17, **dadurch gekennzeichnet, dass** sich der Querschnitt des zweiten Luftströmungspfads (59) mit zunehmendem Abstand vom Lufteinlass und/oder Luftauslass vergrößert.

19. Kühlsystem nach Anspruch 1 oder 2, **dadurch gekennzeichnet, dass** der Rahmen (29) und die daran angebrachte mindestens eine Klappe (35) und/oder das daran angebrachte mindestens eine Rollo (73,75) eine Baueinheit bilden, die derart gestaltet und angeordnet ist, dass sie eine Abdeckung der Abdeckvorrichtung (27) für die -in Strömungsrichtung des ersten Luftstroms (53) gesehen- Kühlerrückseite (25) bildet.

20. Kühlsystem nach einem der vorhergehenden Ansprüche, **dadurch gekennzeichnet, dass** bei in Sperrstellung verlagerter, mindestens einer Klappe (35) und/oder in Sperrstellung verlagertem, mindestens einem Rollo (73,75) der Freiraum (39) zwischen der Abdeckung der Abdeckvorrichtung (27) und der Kühlerrückseite (25) begrenzt ist, der umfangsseitig zumindest teilweise, vorzugsweise vollständig, abgeschlossen ist.

21. Kühlsystem nach einem der vorhergehenden Ansprüche 1, 19 oder 20, **dadurch gekennzeichnet, dass** der Rahmen (29) aus mehreren Rahmenteilen (29.1,29.2,29.3,29.4) besteht und dass an mindestens einem der Rahmenteile (29.1,29.2,29.3,29.4) des Rahmens die mindestens eine Durchgangsöffnung (31) zum Anschluss an die Einrichtung zur Erzeugung der Luftströmung des zweiten Luftstroms vorgesehen ist, wobei die Einrichtung vorzugsweise seitlich des Kühlers (19) angeordnet ist.

22. Kühlsystem nach einem der vorhergehenden Ansprüche, **dadurch gekennzeichnet, dass** die Luftströmungs-Erzeugungseinrichtung mindestens ein Gebläse zur Beaufschlagung des Freiraums (39) zwischen der Abdeckung (27) und der Kühlerrückseite (25) mit einem Unterdruck oder einem Überdruck aufweist, oder zur Beaufschlagung des Freiraums (39) zwischen der Abdeckung (27) und der Kühlervorderseite bei drückendem Gebläse.

23. Kühlsystem nach einem der vorhergehenden Ansprüche, **dadurch gekennzeichnet, dass** der Kühler (19) -im Querschnitt gesehen- eine Krümmung aufweist.

24. Kühlsystem nach Anspruch 23, **dadurch gekennzeichnet, dass** die Krümmung teilkreisförmig ausgebildet ist.

25. Kühlsystem nach einem der vorhergehenden Ansprüche 23 oder 24, **dadurch gekennzeichnet, dass** die Krümmung beziehungsweise Rundung des Kühlers (19) in Richtung der Vorwärtsbewegung des Fahrzeugs (3) oder in entgegengesetzter Richtung zeigt.

26. Kühlsystem nach einem der vorhergehenden Ansprüche 23 oder 24, **dadurch gekennzeichnet, dass** der Kühler (19) -im Querschnitt gesehen- eine keilförmige Kontur aufweist, wobei die Keilspitze in Richtung der Vorwärtsbewegung des Fahrzeugs (3) oder in entgegengesetzter Richtung zeigt.

27. Kühlsystem nach einem der vorhergehenden Ansprüche, **dadurch gekennzeichnet, dass** die Form des Rahmens (29) an die des Kühlers (19) beziehungsweise die im ersten Luftströmungspfad (57) angeordnete, vom ersten Luftstrom (53) durchströmbare Kühlerfläche angepasst ist.

28. Kühlsystem nach einem der vorhergehenden Ansprüche, **dadurch gekennzeichnet, dass** der Kühler (19) ein Teil eines aus mehreren Wärmetauschern (17,26) bestehenden Kühlmoduls ist, wobei der andere/die anderen Wärmetauscher (26) -in Vorwärtsbewegung (8) des Fahrzeugs (3) gesehen- vor dem Kühler (19) angeordnet ist/sind.

29. Kühlsystem nach einem der vorhergehenden Ansprüche, **dadurch gekennzeichnet, dass** die erste Betriebsphase ein Staudruckbetrieb ist.

30. Kühlsystem nach einem der vorhergehenden Ansprüche, **dadurch gekennzeichnet, dass** die zweite Betriebsphase ein Lafterbetrieb ist

## Claims

1. Cooling system (1) for motor vehicles with at least one radiator (19) to which, in a first operating phase, a first air stream (53) can be supplied via a first air flow path (57) and which, in an alternative or simultaneous second operating phase, can be supplied, by means of at least one air-conveying device, with a second air stream (55) flowing along a second air flow path (59), wherein the two air flow paths (57, 59) are at least in some regions oriented at such an angle to each other that the air-conveying device is located outside or essentially outside the first air flow path (57), and with a device (28) for controlling the air stream flowing through the radiator (19), wherein the device (28) is located in the region of air flow away from or toward the radiator (19) - as seen in the direction of the air stream - and is provided as at least one covering device (27) capable, in a manner adjustable as a function of the desired operating phase, of uncovering or also completely covering the cross-section of the first air flow path (57) by means of an actuator, wherein the covering device (27) is provided with several flaps (35) preferably arranged as in a louver and the controlling of the flap actuation is carried out by a controlling/regulation device of the cooling system and the flaps (35) are arranged on a frame (29) which has at least one flow-through opening (31) for connection to a device for generating an air flow of the second air stream.

2. Cooling system (1) for motor vehicles with at least one radiator (19) to which, in a first operating phase, a first air stream (53) can be supplied via a first air flow path (57) and which, in an alternative or simultaneous second operating phase, can be supplied, by means of at least one air-conveying device, with a second air stream (55) flowing along a second air flow path (59), wherein the two air flow paths (57, 59) are at least in some regions oriented at such an angle to each other that the air-conveying device is located outside or essentially outside the first air flow path (57), and with a device (28) for controlling the air stream flowing through the radiator (19), wherein the device (28) is located in the region of air flow away from or toward the radiator (19) - as seen in the direction of the air stream - and is provided as at least one covering device (27) capable, in a manner adjustable as a function of the desired operating phase, of uncovering, or partly covering, or also completely covering the cross-section of the first air flow path (57) by means of an actuator, wherein the covering device (27) is provided with several flaps (35) preferably arranged as in a louver and the controlling of the flap actuation is carried out by a controlling/regulation device of the cooling system and the flaps (35) are arranged on a frame (29) which has at least one flow-through opening (31) for connection to a device for generating an air flow of the second air stream.

3. Cooling system according to claim 1 or 2, **characterized in that** the two air flow paths (57, 59) are at least in some regions separated from each other and cross or combine only in the region of radiator (19).

4. Cooling system according to one of the preceding claims, **characterized in that** the radiator (19) is allotted to a combustion engine (9) of the motor vehicle, whereby the first air stream can be supplied to the radiator (19) via at least one air inlet (12) provided in the outer wall (11) of the motor vehicle (3).

5. Cooling system according to one of the preceding claims, **characterized in that** the region of flow away from the radiator (19) is free of devices for generating an air stream.

6. Cooling system according to one of the preceding claims, **characterized in that** the radiator (19) is located in the front end region (5) or in the rear end region of the motor vehicle (3).

7. Cooling system according to claim 6, **characterized in that** - as seen in the direction of forward movement (8) of motor vehicle (3) - the radiator (19) is disposed in front of a drive unit (9) of the motor vehicle (3).

8. Cooling system according to one of the preceding claims 2 to 7, **characterized in that** the device (28) for controlling the first air stream is provided with several flaps (35) disposed in the first air flow path and swiveling to several positions, said flaps uncovering the first flow path in a first position and closing off said flow path at least partly and preferably completely in a second position.

9. Cooling system according to one of the preceding claims, **characterized in that** when the flaps (35) are swiveled into the first position, the first air stream uniformly passes through the entire surface of the radiator (19) and substantially homogeneously.

10. Cooling system according to one of the preceding claims, **characterized in that** a first number of flaps (35) is allotted to a first partial region and at least a second number of flaps (35) is allotted to at least a second partial region of radiator (19), and that the first and second number of flaps (35) can be displaced/closed independently of each other.

11. Cooling system according to one of the preceding claims, **characterized in that** at least some of the flaps (35) run parallel to each other and can be swiveled preferably about a parallel or substantially parallel imagined horizontal or vertical axis (37).

12. Cooling system according to one of the preceding claims, **characterized in that** the covering device (27) consists of at least two louvers (73, 75) which on closing can be adjusted in relation to each other.

13. Cooling system according to one of the preceding claims 1, 2 or 12, **characterized in that** to the/each louver is allotted an air-permeable support (83), particularly a support grille (85).

14. Cooling system according to one of the preceding claims, **characterized in that** the covering device (27) leaves toward the radiator (19) a free space (39) for the creation of at least one part of the second air flow path (59).

15. Cooling system according to claim 14, **characterized in that** to form the free space (39) there is provided an air-guiding box with the covering device (27), the cover of which can be allotted to a flow cross-section for the first air stream (53).

16. Cooling system according to claim 15, **characterized in that** laterally to the flow cross-section at least one air inlet and/or at least one air outlet for the second air stream (55) is/are disposed.

17. Cooling system according to claim 16, **characterized in that** the cross-section of the air inlet and/or air outlet for the second air stream (55) is oriented transversely, especially at a right angle, to the flow cross-section of the first air stream (53).

18. Cooling system according to one of the preceding claims 16 or 17, **characterized in that** the cross-section of the second air flow path (59) increases with increasing distance from the air inlet and/or air outlet.

19. Cooling system according to claim 1 or 2, **characterized in that** the frame (29) and the at least one flap (35) attached to it and/or the at least one louver (73, 75) attached to it form a structural unit which is designed and disposed in a manner such that they form a cover of the cover device (27) for the rear side (25) of the radiator - as seen in the flow direction of the first air stream (53).

20. Cooling system according to one of the preceding claims, **characterized in that** the free space (39) between the cover of the cover device (27) and the rear side (25) of the radiator is defined when at least one flap (35) is placed into the closing-off position, and/or at least one louver (73, 75) is placed into the closing-off position, the periphery of said free space being at least partly, and preferably completely closed.

21. Cooling system according to one of the preceding claims 1, 19 or 20, **characterized in that** the frame (29) consists of several frame parts (29.1, 29.2, 29.3, 29.4) and that on at least one of the frame parts (29.1, 29.2, 29.3, 29.4) of the frame there is provided the at least one flow-through opening (31) for connection to a device for generating an air flow of the second air stream, wherein the device is preferably disposed laterally to the radiator (19).

22. Cooling system according to one of the preceding claims, **characterized in that** the air flow-generating device is provided with at least one blower to apply the free space (39) between the cover (27) and the rear side (25) of the radiator with a negative pressure or a high pressure, or to apply the free space (39) between the cover (27) and the front side of the radiator when the blower is pressing.

23. Cooling system according to one of the preceding claims, **characterized in that** the radiator (19) has a curvature when seen in cross-section.

24. Cooling system according claim 23, **characterized in that** the curvature is partly circular.

25. Cooling system according to one of preceding claims 23 or 24, **characterized in that** the curvature or rounding of the radiator (19) points in the direction of forward movement of the motor vehicle (3) or in the opposite direction.

26. Cooling system according to one of the preceding claims 23 or 24, **characterized in that** the radiator (19) - as seen in cross-section - exhibits a wedge-like contour, the wedge tip pointing in the direction of forward movement of the motor vehicle (3) or in the opposite direction.

27. Cooling system according to one of the preceding claims, **characterized in that** the shape of the frame (29) is adapted to the shape of the radiator (19) or to the radiator surface disposed in the first flow path (57) and exposable to the first air stream (53).

28. Cooling system according to one of the preceding claims, **characterized in that** the radiator (19) is a part of a cooling module consisting of several heat exchangers (17, 26), the other heat exchanger/heat exchangers (26) being disposed in front of the radiator (19), as seen in the direction of forward movement (8) of the motor vehicle (3).

29. Cooling system according to one of the preceding claims, **characterized in that** the first operating phase is a ram pressure operation.

30. Cooling system according to one of the preceding claims, **characterized in that** the second operating phase is a fan operation.

## Revendications

1. Système de refroidissement (1) pour véhicule avec au moins un radiateur (19) qui peut être alimenté dans une première phase de fonctionnement par un premier chemin d'écoulement d'air (57) avec un premier courant d'air (53) et qui peut subir l'impact, dans une seconde phase de fonctionnement alternative et simultanée au moyen d'au moins un dispositif de transport d'air avec un second courant d'air (55) traversant un second chemin d'écoulement d'air (59), les deux chemins d'écoulement d'air (57, 59) formant au moins par zone un angle entre eux de sorte que le dispositif de transport d'air se trouve à l'extérieur ou sensiblement à l'extérieur du premier chemin d'écoulement d'air (57), et avec un dispositif (28) pour la commande du courant d'air traversant le radiateur (19), le dispositif (28) - vu dans la direction du courant d'air - étant disposé dans la zone d'aval ou dans la zone d'amont du radiateur (19) et est au moins réalisé comme un dispositif de recouvrement (27) qui peut recouvrir complètement ou également dégager la section transversale du premier chemin d'écoulement d'air (57) au moyen d'un entraînement de réglage de manière mobile en fonction de la phase de fonctionnement souhaitée, le dispositif de recouvrement (27) présentant plusieurs volets en forme de lamelles (35) et la commande de l'actionnement des volets s'effectuant par un dispositif de réglage/commande du système de refroidissement et les volets (35) étant disposés sur un cadre (29) qui présente au moins une ouverture de passage (31), pour le raccordement à un dispositif de génération d'un écoulement d'air du second courant d'air.

2. Système de refroidissement (1) pour véhicule avec au moins un radiateur (19) qui peut être alimenté dans une première phase de fonctionnement par un premier chemin d'écoulement (57) avec un premier courant d'air (53) et qui peut subir l'impact, dans une seconde phase de fonctionnement alternative et simultanée au moyen d'au moins un dispositif de transport d'air, avec un second courant d'air (55) passant un second chemin de d'écoulement d'air (59), les deux chemins d'écoulement d'air (57, 59) formant au moins par zone un angle entre eux de sorte que le dispositif de transport d'air se trouve à l'extérieur ou sensiblement à l'extérieur du premier chemin d'écoulement d'air (57), et avec un dispositif (28) pour la commande du courant d'air traversant le radiateur (19), le dispositif (28) - vu dans la direction du courant d'air - étant disposé dans la zone d'aval ou dans la zone d'amont du radiateur (19) et est au moins réalisé comme un dispositif de recouvrement (27) qui peut recouvrir partiellement ou complètement ou dégager également la section transversale du premier chemin d'écoulement d'air (57) au moyen d'un entraînement de réglage de manière mobile en fonction de la phase de fonctionnement souhaitée, le dispositif de recouvrement (27) présentant plusieurs volets en forme de lamelles (35) et la commande de l'actionnement des volets s'effectuant par un dispositif de réglage/commande du système de refroidissement et les volets (35) étant disposés sur un cadre (29) qui présente au moins une ouverture de passage (31), pour le raccordement à un dispositif de génération d'un écoulement d'air du second courant d'air.

3. Système de refroidissement selon la revendication 1 ou 2, **caractérisé en ce que** les deux chemins d'écoulement d'air (57, 59) sont réalisés au moins séparés l'un de l'autre par zone et ne se croisent ou ne se rejoignent que dans la zone du radiateur (19).

4. Système de refroidissement selon l'une des revendications précédentes **caractérisé en ce que** le radiateur (19) est associé à un moteur à combustion interne (9) du véhicule, le radiateur (19) étant alimenté en premier courant d'air par au moins une entrée d'air (12) prévue dans une paroi externe (11) du véhicule (3).

5. Système de refroidissement selon l'une des revendications précédentes **caractérisé en ce que** la zone d'aval du radiateur (19) est exempte de dispositifs pour la génération d'un courant d'air.

6. Système de refroidissement selon l'une des revendications précédentes **caractérisé en ce que** le radiateur (19) est disposé dans la zone d'extrémité frontale (5) dans la zone d'extrémité arrière du véhicule (3).

7. Système de refroidissement selon la revendication 6 **caractérisé en ce que** le radiateur (19) - vu dans le déplacement d'avance (8) du véhicule (3) - est disposé devant un agrégat moteur (9) du véhicule (3).

8. Système de refroidissement selon l'une des revendications précédentes 2 à 7 **caractérisé en ce que** le dispositif (28) pour la commande du premier courant d'air présente plusieurs volets (35) pivotants dans plusieurs positions disposées dans le premier chemin d'écoulement, volets qui libèrent le premier chemin d'écoulement d'air dans une première position et qui le bloquent dans une seconde position au moins partiellement, de préférence entièrement.

9. Système de refroidissement selon l'une des revendications précédentes **caractérisé en ce que** pour les volets basculés dans la première position (35), l'ensemble de la surface refroidissante du radiateur (19) subit l'impact de manière régulière du premier courant d'air et est atteinte essentiellement par le courant de manière homogène.

10. Système de refroidissement selon l'une des revendications précédentes **caractérisé en ce qu'**un premier nombre de volets (35) est associé à une première zone partielle et au moins un second nombre des volets (35) étant associé à au moins une seconde zone partielle du radiateur (19) et **en ce que** le premier nombre et le second nombre des volets (35) peuvent être déplacés/fermés indépendamment les uns des autres.

11. Système de refroidissement selon l'une des revendications précédentes **caractérisé en ce qu'**au moins une partie des volets (35) sont parallèles les unes à les autres et sont pivotants de préférence respectivement autour d'un axe (37) s'étendant parallèlement respectivement ou essentiellement parallèle a une verticale ou une horizontale imaginaire.

12. Système de refroidissement selon l'une des revendications précédentes **caractérisé en ce que** le dispositif de recouvrement (27) est formé par au moins deux stores (73, 75) réglables l'un par rapport à l'autre lors de leur fermeture.

13. Système de refroidissement selon l'une des revendications précédentes 1, 2 ou 12 **caractérisé en ce qu'**à le/chaque store est associé à un support perméable à l'air (83) en particulier une grille de support (85).

14. Système de refroidissement selon l'une des revendications précédentes **caractérisé en ce que** le dispositif de recouvrement (27) laisse un espace libre (39) pour le radiateur (19) en vue de former au moins une partie du second chemin d'écoulement d'air (59).

15. Système de refroidissement selon la revendication 14 **caractérisé en ce que** pour la formation de l'espace libre (39), il est prévu un caisson de guidage d'air qui présente le dispositif de recouvrement (27) dont le recouvrement peut être associé à une section transversale d'écoulement pour le premier courant d'air (53).

16. Système de refroidissement selon la revendication 15 **caractérisé en ce qu'**à côté de la section transversale de l'écoulement, on a disposé au moins une entrée d'air et/ou au moins une sortie d'air pour le second courant d'air (55).

17. Système de refroidissement selon la revendication 16 **caractérisé en ce que** la section transversale de l'entrée d'air et/ou de la sortie d'air pour le second courant d'air (55) s'étend transversalement, en particulier en angle droit par rapport à la section transversale d'écoulement du premier courant d'air (53).

18. Système de refroidissement selon l'une des revendications précédentes 16 ou 17 **caractérisé en ce que** la section transversale de la seconde voie d'écoulement d'air (59) s'élargit avec une distance croissante depuis l'entrée et/ou la sortie d'air.

19. Système de refroidissement selon la revendication 1 ou 2 **caractérisé en ce que** le cadre (29) et l'au moins un volet (35) placé à cela et/ou l'au moins un store (73, 75) placé à cela forment une unité de construction qui est réalisée et disposée de manière à former un recouvrement du dispositif de recouvrement (27) pour la face arrière (25) du radiateur - vu dans le sens découlement du premier courant d'air (53).

20. Système de refroidissement selon l'une des revendications précédentes **caractérisé en ce que** pour au moins un volet (35) déplacé en position de blocage et/ou au moins un store (73, 75) déplacé en position de blocage, l'espace libre (39) entre le recouvrement du dispositif de recouvrement (27) et la face arrière (25) du radiateur est limité et est fermé sur la périphérie au moins partiellement, de préférence entièrement.

21. Système de refroidissement selon l'une des revendications 1, 19 ou 20 **caractérisé en ce que** le cadre (29) se compose de plusieurs parties de cadre (29.1, 29.2, 29.3, 29.4) et **en ce que** sur au moins une des parties de cadre (29.1, 29.2, 29.3, 29.4), il est prévu au moins une ouverture de passage (31) pour le raccordement au dispositif de génération de l'écoulement d'air du second courant d'air, le dispositif étant disposé de préférence à coté du radiateur (19).

22. Système de refroidissement selon l'une des revendications précédentes **caractérisé en ce que** le dispositif de génération d'écoulement d'air présente au moins un ventilateur pour l'impact de l'espace libre (39) entre le recouvrement (27) et la face arrière (25) de radiateur par une dépression ou une surpression ou pour l'impact de l'espace libre (39) entre le recouvrement (27) et la face avant du radiateur quand le ventilateur externe une pression.

23. Système de refroidissement selon l'une des revendications **caractérisé en ce que** le radiateur (19) présente une courbure - vue en coupe transversale.

24. Système de refroidissement selon la revendication 23 **caractérisé en ce que** la courbure est réalisée en forme de partie de cercle.

25. Système de refroidissement selon l'une des revendications précédentes 23 ou 24 **caractérisé en ce que** la courbure respectivement l'arrondi du radiateur (19) est dirigé vers le mouvement d'avance du véhicule (3) ou dans la direction opposée.

26. Système de refroidissement selon l'une des revendications précédentes 23 ou 24 **caractérisé en ce que** le radiateur (19) - vue en coupe transversale - présente un contour cunéiforme, la pointe du cône pointant en direction du mouvement d'avance du véhicule (3) ou dans la direction opposée.

27. Système de refroidissement selon l'une des revendications précédentes **caractérisé en ce que** la forme du cadre (29) est adaptée à celle du radiateur (19) respectivement à celle de la surface de radiateur traversée par le premier courant d'air (53) et disposée dans le premier chemin d'écoulement d'air (57).

28. Système de refroidissement selon l'une des revendications précédentes **caractérisé en ce que** le radiateur (19) est une partie d'un module de refroidissement se composant de plusieurs échangeurs thermiques (17, 26), l'autre ou les autres échangeurs thermiques (26) étant disposé/s devant le radiateur (19) - vu dans le sens d'avance (8) du véhicule (3).

29. Système de refroidissement selon l'une des revendications précédentes **caractérisé en ce que** la première phase de fonctionnement est un mode de pression dynamique.

30. Système de refroidissement selon l'une des revendications précédentes **caractérisé en ce que** la seconde phase de fonctionnement est un mode de ventilateur.
